# EUROPEAN PATENT SPECIFICATION

(11) **EP 0 530 246 B1**
(45) Date of publication and mention of the grant of the patent: **17.08.1994**
(21) Application number: 91909477.1
(22) Date of filing: 14.05.1991
(51) Int. Cl.: H04L 12/40, H04L 12/28

(54) **METHOD FOR IMPROVING THE TRANSMISSION OF INFORMATION IN THE FORM OF DATA PACKETS, IN ACCORDANCE WITH A DISTRIBUTED QUEUING PROTOCOL**
VERFAHREN ZUM VERBESSERN DER ÜBERTRAGUNG VON NACHRICHTEN, GEMÄSS EINEM PROTOKOLL MIT VERTEILTEN WARTESCHLANGEN
PROCEDE D'AMELIORATION DE TRANSMISSION D'INFORMATIONS SOUS FORME DE PAQUETS DE DONNEES EN FONCTION D'UN PROTOCOLE DE MISE EN FILE D'ATTENTE REPARTI

(30) Priority: 21.05.1990 NL 9001173
(43) Date of publication of application: 10.03.1993
(73) Proprietor: Koninklijke PTT Nederland N.V., 2509 CH Den Haag (NL)
(72) Inventor: VAN NIELEN, Marcus, Josephus, Johannes, NL-2263 XV Leidschendam (NL)
(86) International application number: PCT/EP91/00907
(87) International publication number: WO 91/18461

(56) References cited:
- IEEE Communications Magazine, vol. 26, no. 4, April 1988, IEEE, New York (US), R.M. Newman et al.: "The QPSX man", pages 20-28
- IEEE International Conference on Communications, vol. 1,2,3, Boston, US, June 11-14, 1989, IEEE, New York (US), H. Ohnishi et al.: "ATM ring protocol and performance", pages 394-398

## Description

The invention relates to a method for transmitting information in the form of data packets in a communications network which comprises two unidirectional transmission channels of opposing transmission of which is linked both to the first and to the second transmission channel, information being moved, under the control of clock signals, respectively from the first to the last access unit linked to the one transmission channel and from the last to the first access unit linked to the other transmission channel and successive time slots being generated which always comprise the same predetermined number of clock signal cycles, in which time slots at least a number of information bits can be written, an access unit which wishes to transmit a data packet placing a request bit in a time slot in the transmission channel other than the channel in which the data packet has to be transmitted and each access unit recording the number of request bits passed through and the number of request bits still to be transmitted by said access unit.

A method of this type is described in European Patent Application EP-A-0203165 under the name QPSX protocol, but in the meantime has become better known in specialist circles by the name DQDB protocol, which name will also be used hereinafter.

According to the DQDB protocol, use is made of two transmission channels, in general data buses, (1 and 2) with mutually opposing communication directions. A series of successive access units is connected to the two buses. The information to be transmitted is transferred to time slots of a fixed size (53 bytes).

Access units which have data to transmit select one of the two buses, for example using as criterion the location of the access unit to which the data must be transmitted. The data packets to be transmitted are dispatched via the time slots passing by, after first completing an access protocol for the relevant time slot. This access protocol proceeds as follows:

An access unit which receives a report for transmission in the transmission direction of bus 1 places, as soon as this is possible, a request bit in a predetermined section of a time slot on bus 2. By this means the access units in the transmission direction of bus 2, that is to say opposite to the transmission direction of bus 1, are informed that a report is ready for transmission on bus 1 and that these access units must allow an empty time slot to pass by. In this way, as it were, a distributed FIFO buffer is constructed for each bus. For this mechanism a so-called request counter, a so-called countdown counter and a so-called outstanding request counter are provided in each access unit for each bus.

If an access unit has nothing to transmit, the passage of a request bit on bus 2 results in the counter reading of the request counter belonging to said bus being increased by one. The request counter in each access unit which belongs to bus 2 thus contains an indication with regard to the number of still outstanding requests for transmission on bus 1, while mutatis mutandis the same applies for the request counter in each access unit which belongs to bus 1. Each empty time slot, that is to say a possibility for transmitting data, which passes by on bus 1 results in the reading on the request counter of bus 2 being reduced by one.

When the relevant access unit receives data for transmission on bus 1, the contents of the request counter of bus 2 are transferred to the countdown counter of bus 1 and the request counter of bus 2 is reset. The countdown counter consequently contains information with regard to the number of outstanding requests before the relevant access unit received a data packet for transmission, while the request counter from that point in time starts to record the information with regard to the number of still outstanding requests after said data packet has been offered for transmission. In order that the relevant access unit is able to transmit this data packet a request bit must be transmitted on bus 2; this is effected by increasing the counter reading of the outstanding request counter of bus 2 by one. As soon as the relevant access unit becomes able to transmit a request bit on bus 2, the counter reading of the outstanding request counter is reduced by one. In principle, a request bit is transmitted for each data packet to be transmitted. When an empty time slot passes by on bus 1, the counter reading of the countdown counter of bus 1 is reduced by one, and when the counter reading of the countdown counter consequently becomes zero, the data packet may be dispatched in the first subsequent empty time slot.

A drawback of the DQDB protocol is that the capacity of the buses for the transmission of data is not put to optimum use, because a request bit always passes through to the end of the bus, so that the situation can arise that free time slots are reserved when this is no longer necessary, because the access unit which transmitted this request bit has already been able to transmit its data.

It is pointed out that a protocol which is known in specialist circles by the name D³Q protocol and which can be regarded as an improvement of the DQDB protocol has recently been proposed in the as yet unpublished Swiss Patent Application CH-A-00566/89-8. In this protocol use is made of the same reservation mechanism for time slots as in the DQDB protocol. An important difference from the DQDB protocol is, however, that request bits can be removed from a bus if they have become superfluous because the requesting access unit has already become able to transmit a data packet. This erasure of a request bit is effected in the following way:

By means of an empty slot counter, each access unit records the number of time slots passing by on a bus for which no request has been submitted. The empty slot counter thus contains information with regard to the number of possibilities for transmission which an access unit has allowed to pass through. If the counter reading of the empty slot counter is not zero, when a request is received on the other bus by means of a request bit in a time slot, it is then possible, because a possibility for transmission, that is to say an empty time slot, has already been allowed to pass through beforehand by the access unit, for said request bit to be erased by resetting the latter. At the same time, the counter reading of the empty slot counter is reduced by one, because one possibility for transmission is going to be used.

If the counter reading of the empty slot counter is zero, each incoming request bit is allowed to pass through and the counter reading of the request counter is increased by one. The two counters can therefore never simultaneously have a counter reading with a value greater than zero. The request counter contains information with regard to the number of still outstanding requests for empty time slots. If in this situation an empty time slot passes by, said time slot is allowed to pass through and the counter reading of the request counter is reduced by one.

In order to prevent a single passing empty time slot resulting in the request bit being reset in several access units, use is made of a handshake protocol which involves each station which receives and forwards an empty time slot, as a result of which the counter reading of the empty slot counter of said access unit is increased by one, informing the access unit which for-warded said empty time slot and is the preceding unit in the transmission direction that said empty time slot has been received. For this purpose a request bit is transmitted in a time slot on the other bus, which results in the counter reading of the empty slot counter in the preceding access unit being reduced by one and the "handshake" request bit being erased.

An advantage of the D³Q protocol over the DQDB protocol is that request bits do not now pass through the entire bus and reserve no further empty time slots as soon as they have passed by "their" empty time slot.

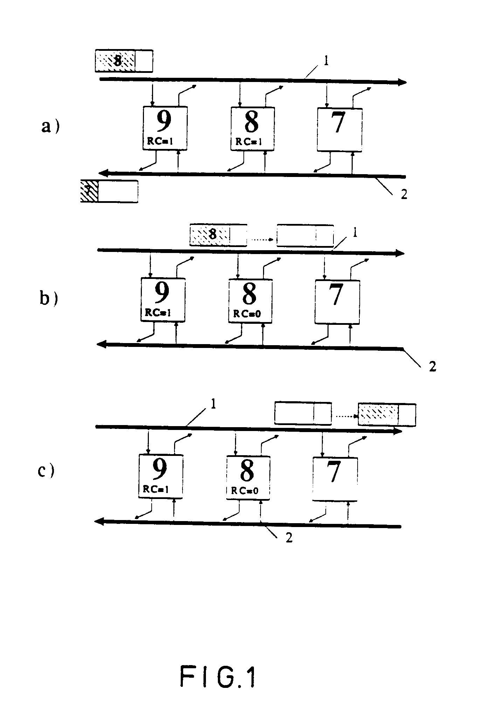

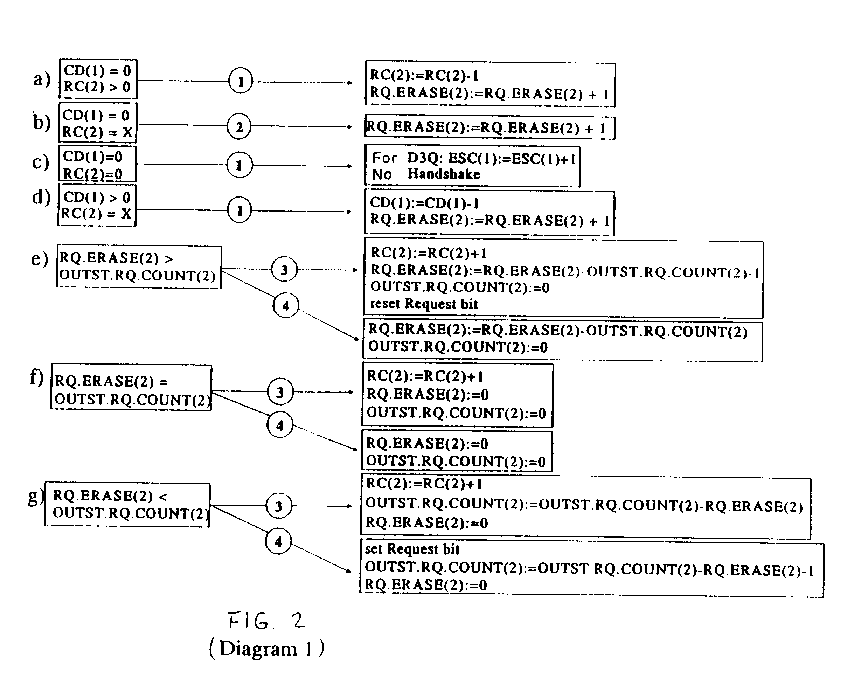

However, if the D³Q protocol were to be combined with time slot erasure techniques, such as destination deletion, that is to say the emptying of a time slot when this has arrived at the destination, which can be desirable in order, on the one hand, yet further to increase the efficiency of the use of the transmission channels and, on the other hand, to make it possible to use the D³Q protocol in a ring structure, a problem arises which will be illustrated with reference to Figure 1 a,b,c.

Figure 1 shows, by way of example, three access units or stations 7, 8 and 9. The bus 1 is always indicated diagrammatically above these stations and the bus 2 below these stations, the time slots being shown, likewise diagrammatically, as rectangles, which time slots are divided into a first section in which, inter alia, the request bit can be placed, and a second section for the data. If one of these sections is hatched in the figure, this means that it contains, respectively, data or a request bit, while the numeral in the hatched section indicates the station for which the data is intended or the station which has originated the request bit. Figures 1 a, b, c show three successive steps, a time slot having arrived at the next station in each case.

Assume that, as shown in Figure la, station 7 wishes to transmit data. For this purpose said station places a request bit in a time slot which, seen in the figure, goes via the bus 2 to the left. In the stations 8 and 9 this request bit causes the counter reading of the request counter (RC) to be increased by one, which is indicated by RC = 1. It is then assumed that a full time slot arrives via the other bus with a data packet which is intended for station 8.

Figure 1b shows that the status of station 9 does not change. Station 8 reads the contents of the time slot and erases these (destination deletion) and lowers the counter reading of the request counter belonging to this station by one because an empty time slot, and thus a possibility for transmission, is forwarded. Subsequently, as is shown in Figure 1c, station 7 can transmit its data in this empty time slot. However, in station 9 a request for an empty time slot is still recorded in the request counter, whereas station 7 has already transmitted the data. In this way, more time slots are thus reserved than are needed and the effective capacity of the bus is reduced.

If the D³Q protocol is to be used in a ring structure in which the ends of each of the buses are linked together, with a mechanism being provided for erasing the data contents from a time slot when it has reached its destination, this would lead to substantial problems because, as described above, request bits which have become superfluous remain recorded in request counters, which in the course of time would lead to a reduction in the effective capacity and ultimately to the complete standstill of communication on the ring.

The aim of the invention is to provide a solution to this problem, by which means it becomes possible, via a communications network having the configuration described above, both in a ring structure and in a structure with buses of finite length, to erase the information in time slots which have reached their destination, without this leading to a reduction in the effective capacity of the network, but, on the contrary, the capacity is utilised to the optimum.

To this end the invention provides a method of the abovementioned type, with which data in a time slot can be erased in at least one access unit and with which each access unit which is able to erase data is able to reset received request bits, with which, in said access units for the relevant transmission channel, the number of request bits to be reset by said access unit is recorded, and with which a request bit on a transmission channel is reset by the access unit which receives this request bit when the number of request bits to be reset by said access unit on said channel is greater than the number of request bits still to be transmitted by said access unit over said channel.

The method according to the invention can best be understood if it is explained with reference to a diagram which gives an overview of the various statuses a - g of an access unit and which then indicates, in the case of a specific occurrence, which action results from this occurrence for each of the said statuses. A diagram of this type is shown in the appended status diagram. In this context it is emphasised that this diagram shows only those statuses, occurrences and actions in respect of which the method differs from the known DQDB or D³Q protocol; in respect of all of the statuses and occurrences which are not shown it is the case that the actions which result therefrom are the same as in the case of the original DQDB or D³Q protocol.

In the status diagram it is assumed that the data are transmitted via bus 1 and that, therefore, the request bits are transmitted via bus 2. However, the method proceeds in the same way for transmission of data via bus 2 and of request bits via bus 1. Furthermore, in the status diagram a distinction is made between four different occurrences 1-4, which can arise when a time slot passes by an access unit and which, respectively, have the following significance:
1) A full time slot has arrived via bus 1 at a specific station and said time slot has been read, emptied and forwarded empty by said station;
2) A full time slot has arrived on bus 1 at a specific station and said time slot has been read, emptied and refilled by said station;
3) A time slot containing a request bit has arrived on bus 2 at a specific station; and
4) A time slot without a request bit has arrived on bus 2 at a specific station.

Furthermore, for reasons of clarity the following abbreviations have been used in the diagram for the various counters, the bus on which the counter reading can be influenced by occurrences being indicated in brackets after the abbreviation:
- RC: : Request counter
- CD: : Countdown counter
- RQ.ERASE: : Request erase counter
- OUTST.RQ.COUNT: : Outstanding request counter
- ESC: : Empty slot counter

Finally, the following abbreviation is also used:
- X: : Status unimportant

If a time slot is emptied and forwarded empty by a specific station (occurrence 1) and still outstanding requests are recorded at said station, which is the case if the counter reading of the request counter is greater than 0 or that of the countdown counter is greater than 0, as shown in status a and d, this station is then entitled to erase a request bit and the counter reading of the relevant request erase counter is increased by one. In addition, the counter reading of the request counter and that of the countdown counter are reduced by one in the same way as in the original protocol. If, however, the time slot is emptied when the counter reading of the two counters is zero (status c), nothing occurs in the case of the DQDB protocol. In the case of the D³Q protocol the counter reading of the empty slot counter is increased by one, but a handshake protocol is not carried out, which signifies that the counter reading of the outstanding request counter is not increased.

If, in the event of an occurrence 2, a specific station empties a time slot and fills this again itself, which signifies that there was a data packet to be transmitted and the counter reading of the countdown counter was zero (status b), the counter reading of the request erase counter is then also increased by one.

A station whose counter reading of the request erase counter has a value greater than 0 can erase as many request bits as the value of the request erase counter indicates. If, on the other hand, the station in question itself still has request bits to transmit, which is indicated by the counter reading of the outstanding request counter being greater than 0, request bits can then be erased only under specific conditions. For this purpose, the counter reading of the outstanding request counter and that of the request erase counter are first compared with one another and the highest counter reading is reduced by the lower or possibly identical counter reading. At the same time, if the time slot passing by contains a request bit, the counter reading of the request counter is increased by one.

If the counter reading of the request erase counter is the highest (status e), a request bit which has been received is then reset. If the counter reading of the outstanding request counter is the highest (status g) the request bit then remains in position or a request bit is placed if it was not yet placed. If the counter reading of the request erase counter is the same as that of the outstanding request counter, nothing occurs with the request bit and said bit is forwarded to the next station.

By means of the invention, with which time slot erasure techniques are combined with queuing protocols such as the DQDB and the D³Q protocol, a protocol is obtained with which the capacity of the transmission system is utilised in a more efficient manner because requests are prevented from remaining in access unit counters unnecessarily. Moreover, by means of the measures according to the invention, the principle of both protocols can also be used in a ring structure, which without said measures would irrevocably lead to considerable problems.

## Claims

1. Method for transmitting information in the form of data packets in a communications network which comprises two unidirectional transmission channel (1,2) of opposing transmission directions and a series of successive access units (7,8,9), each of which is linked both to the first and to the second transmission channel, information being moved, under the control of clock signals, respectively from the first to the last access unit linked to the one transmission channel and from the last to the first access unit linked to the other transmission channel and successive time slots being generated which always comprise the same predetermined number of clock signal periods, in which time slots at least a number of information bits can be written, an access unit which wishes to transmit a data packet placing a request bit in a time slot in the transmission channel other than the channel in which the data packet has to be transmitted and each access unit recording the number of request bits passed and the number of request bits still to be transmitted by said access unit, characterised in that data in a time slot can be erased in at least one access unit and in that each access unit which is able to erase data is able to reset received request bits, in that, in said access units for the relevant transmission channel, the number of request bits to be reset by said access unit is recorded, and in that a request bit on a transmission channel is reset by the access unit which receives said request bit if the number of request bits to be reset by said access unit on said channel is greater than the number of request bits still to be transmitted by said access unit over said channel.

2. Method according to Claim 1, characterised in that each of the transmission channels is operated in a ring structure.

3. Method according to Claim 1 or 2, characterised in that the number of empty time slots which have passed by is recorded in each access unit for each of the transmission channels.

## Patentansprüche

1. Verfahren zum Uebertragen von Informationen in Form von Datenpaketen in einem Kommunikationsnetzwerk umfassend zwei Einweg-Uebertragungskanäle (1, 2) mit entgegengesetzten Uebertragungsrichtungen und eine Serie von aufeinanderfolgenden Zugangseinheiten (7, 8, 9), von denen jede sowohl mit dem ersten als auch mit dem zweiten Uebertragungskanal verbunden ist, wobei von Taktsignalen gesteuerte Informationen von der ersten bis zur letzten mit dem einen Uebertragungskanal verbundenen Zugangseinheit bzw. von der letzten bis zur ersten mit dem andern Uebertragungskanal verbundenen Zugangseinheit bewegt werden und wobei aufeinanderfolgende Zeitschlitze erzeugt werden, die immer die gleiche vorbestimmte Anzahl Taktsignalperioden umfassen, wobei in den Zeitschlitzen mindestens eine Anzahl Informationsbits geschrieben werden kann, wobei eine Zugangseinheit, die Datenpakete zu übertragen wünscht, ein Anfragebit in einem Zeitschlitz in demjenigen Uebertragungskanal plaziert, der nicht der gleiche ist, in dem das Datenpaket übertragen werden muss, und wobei jede Zugangseinheit die Anzahl der passierten Anfragebits und die Anzahl der von dieser Zugangseinheit noch zu übertragenden Anfragebits speichert, **dadurch gekennzeichnet, dass** Daten in einem Zeitschlitz in mindestens einer Zugangseinheit gelöscht werden können, und dass jede Zugangseinheit, die Daten löschen kann, in der Lage ist, empfangene Anfragebits zurückzustellen, dass in diesen Zugangseinheiten des relevanten Uebertragungskanals die Anzahl der von dieser Zugangseinheit zurückzustellenden Anfragebits gespeichert wird, und dass ein Anfragebit auf einem Uebertragungskanal von derjenigen Zugangseinheit zurückgestellt wird, die dieses Anfragebit empfängt, wenn die Anzahl der durch diese Zugangseinheit auf diesem Kanal zurückzustellenden Anfragebits grösser ist als die Anzahl der von dieser Zugangseinheit auf diesem Kanal noch zu übertragenden Anfragebits.

2. Verfahren nach Anspruch 1, **dadurch gekennzeichnet,** dass jeder der Uebertragungskanäle in einer Ringstruktur betrieben wird.

3. Verfahren nach Anspruch 1 oder 2, **dadurch gekennzeichnet,** dass die Anzahl der passierten leeren Zeitschlitze in jeder Zugangseinheit für jeden der Uebertragungskanäle gespeichert wird.

## Revendications

1. Procédé pour transmettre l'information sous forme de paquets de données dans un réseau de communication, qui comprend deux canaux (1, 2) de transmission unidirectionnelle de directions de transmission opposées et une série d'unités d'accès (7, 8, 9) successives, chacune desquelles étant liée à la fois au premier canal de transmission et au second canal de transmission, de l'information étant déplacée, sous le contrôle de signaux d'horloge, respectivement de la première à la dernière unité d'accès liées à l'un des canaux de transmission et de la dernière à la première unité d'accès liées à l'autre canal de transmission, et des tranches de temps successives étant générées, qui comprennent toujours le même nombre prédéterminé de périodes de signal d'horloge, dans lesquelles tranches de temps, au moins un certain nombre de bits d'information peut être écrit, une unité d'accès, qui souhaite transmettre un paquet de données, plaçant un bit de demande dans une tranche de temps dans le canal de transmission autre que le canal dans lequel le paquet de données a à être transmis, et chaque unité d'accès enregistrant le nombre de bits de demande passés et le nombre de bits de demande encore à être transmis par ladite unité d'accès, caractérisé en ce que des données dans une tranche de temps peuvent être effacées dans au moins une unité d'accès et en ce que chaque unité d'accès, qui est capable d'effacer des données, est capable de restaurer des bits de demande reçues, en ce que, dans desdites unités d'accès pour le canal de transmission concerné, le nombre de bits de données à être restauré par ladite unité d'accès est enregistré, et en ce qu'un bit de demande sur un canal de transmission est restauré par l'unité d'accès, qui reçoit ledit bit de demande, si le nombre de bits de demande a être restaurés par ladite unité d'accès sur ledit canal est plus grand que le nombre de bits de demande encore à être transmis par ladite unité d'accès par l'intermédiaire dudit canal.

2. Procédé selon la revendication 1, caractérisé en ce que chacun des canaux de transmission est mis en exploitation dans une structure d'anneau.

3. Procédé selon la revendication 1 ou la revendication 2, caractérisé en ce que le nombre de tranches de temps vides qui ont passé est enregistré dans chaque unité d'accès pour chacun des canaux de transmission.
